# EUROPEAN PATENT APPLICATION

(11) **EP 4 697 144 A1**
(43) Date of publication of application: **18.02.2026**
(21) Application number: 25195640.5
(22) Date of filing: 13.08.2025
(51) Int. Cl.: G06F 3/01, B60K 35/10, B60K 35/25, G06F 3/0354, G06F 3/041, G06F 3/04817, G06F 3/04842, G06F 3/04886

(54) **AUTOMOTIVE USER INTERFACE**

(30) Priority: 16.08.2024 US 202418807622
(71) Applicant: Strattec Security Corporation, Milwaukee, Wisconsin 53209 (US)
(72) Inventor: PIRKEY, Adam, South Milwaukee, WI, 53172 (US); LYNN, Stephanie Patricia, Hoffman Estates, IL, 60169 (US); HUSZ, Zachary, Waukesha, 53188 (US); MORENO GARCIA MENDOZA, Jose Israel, Menomonee Falls, WI, 53051 (US); SALAH, Abdel H., Greenfield, WI, 53220 (US)
(74) Representative: Prüfer & Partner mbB Patentanwälte · Rechtsanwälte

(57) **Abstract**

A user interface for a vehicle includes a touch surface having a user interface region, and a set of three force sensors disposed below the touch surface. The set of three force sensors corresponds to the user interface region. The user interface also includes a controller coupled to the three force sensors, wherein the controller is configured to triangulate a location of a finger press on the touch surface based on feedback from each of the three force sensors.

## Description

### FIELD OF THE INVENTION

This disclosure relates to automotive user interfaces, such as user interfaces for steering wheels in trucks, cars, vans, electric vehicles, and other vehicles.

### SUMMARY

In one aspect, the disclosure provides a user interface for a vehicle. The user interface includes a touch surface having a user interface region, and a set of three force sensors disposed below the touch surface. The set of three force sensors corresponds to the user interface region. The user interface also includes a controller coupled to the three force sensors, wherein the controller is configured to triangulate a location of a finger press on the touch surface based on feedback from each of the three force sensors.

In another aspect, the disclosure provides a user interface for a vehicle. The user interface includes a touch surface having a user interface region, and a set of three force sensors disposed below the touch surface. The set of three force sensors corresponds to the user interface region. At least one of the three force sensors in the set of three force sensors is positioned directly under the user interface region, and at least one of the three force sensors in the set of three force sensors is not positioned directly under the user interface region

In another aspect, the disclosure provides a user interface for a vehicle. The user interface includes a touch surface having a first user interface region and a second user interface region. The user interface also includes a first set of discrete three force sensors disposed below the touch surface and corresponding to the first user interface region, a first discrete haptic element disposed below the touch surface and corresponding to the second user interface region, a second set of three discrete force sensors disposed below the touch surface and corresponding to the second user interface region, a second discrete haptic element disposed below the touch surface and corresponding to the second user interface region, and a controller coupled to each of the first set of three discrete force sensors, the first discrete haptic element, the second set of three discrete force sensors, and the second discrete haptic element.

In another aspect, the disclosure provides a user interface for a vehicle, the user interface having a capacitive touch sensing surface with a light-emitting diode (LED) backlighting, a vibrotactile haptic actuator coupled to the capacitive touch sensing surface, and a force sensor coupled to the capacitive touch sensing surface.

In another aspect, the disclosure provides a vehicle system having a steering wheel and a user interface coupled to the steering wheel.

In another aspect, the disclosure provides a steering wheel user interface having a capacitive sensing surface with backlight light-emitting diodes (LEDs) and surface friction.

In another aspect, the disclosure provides a steering wheel user interface device having a capacitive touch sensing surface with backlight light-emitting diodes (LEDs), force sensing, and vibrotactile feedback based on a sensed force.

Other embodiments and aspects of various embodiments will become apparent by consideration of the detailed description and accompanying drawings.

### BRIEF DESCRIPTION OF THE DRAWINGS

FIG. 1 is a perspective view of a steering wheel having a user interface.
FIG. 2 is a perspective view of the user interface.
FIG. 3 is an exploded view of the user interface.
FIGS. 4 and 5 are views of alternative versions of the user interface.
FIGS. 6-8 are schematic views of various zones and divider walls for the user interface.
FIG. 9 is a perspective view of the user interface, illustrating examples of locations for vibrotactile haptic actuators and force sensors.
FIGS. 10 and 11 illustrate a menu and volume control for the user interface.
FIGS. 12 and 13 illustrate a structure that may be touched to turn on and off various icons on the user interface.
FIGS. 14 and 15 are exploded views of alternate versions of the user interface.
FIG. 16 is a perspective, exploded view of a user interface according to another example.

### DETAILED DESCRIPTION

Before any embodiments are explained in detail, it is to be understood that embodiments are not limited in their application to the details of construction and the arrangement of components set forth in the following description or illustrated in the following drawings. Other embodiments are possible, and embodiments described and illustrated are capable of being practiced or of being carried out in various ways.

The present disclosure is related to technologies and combinations of technologies for use on a steering wheel, and in particular for use on a user interface of a steering wheel. As described herein, such technologies may include, but are not limited to, (1) vibrotactile sensor(s) / actuator(s) for force detection on a user interface; (2) force sensor(s)/transducer(s) for force detection on the user interface; (3) vibrotactile sensor(s) / actuator(s) for haptic feedback; (4) capacitive touch sense; and/or (5) capacitive sense surface(s) with backlighting.

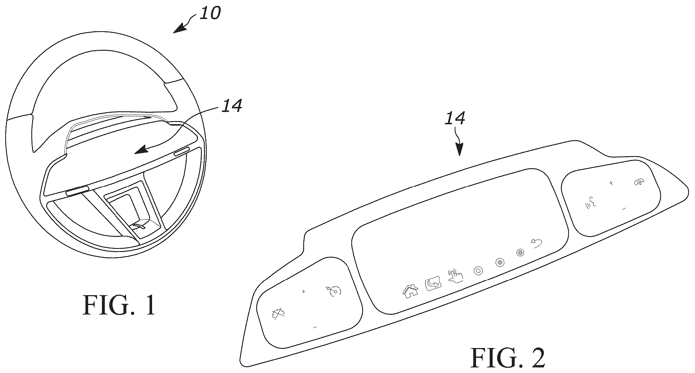

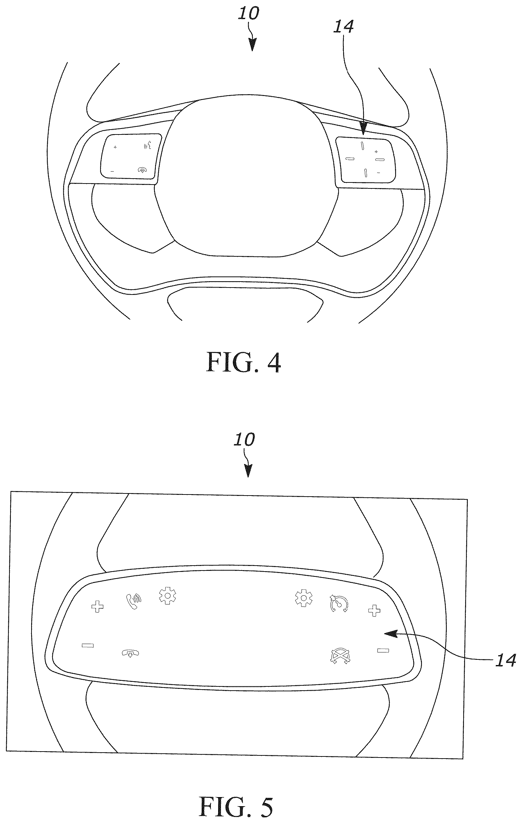

FIGS. 1-17 illustrate a steering wheel 10. The steering wheel 10 may be used, for example, on a motor vehicle (truck, sedan, van, etc.), or other vehicles or equipment. As illustrated in FIGS. 1-17, the steering wheel 10 includes a user interface 14. The user interface 14 is positioned generally centrally (e.g., along a steering wheel hub), although other embodiments may include different positions for the user interface 14 (e.g., located at a top of the steering wheel 10, along a bottom of the steering wheel 10, along a side of the steering wheel 10, along an outer ring of the steering wheel 10, etc.). In some embodiments, the user interface 14 may be used on other vehicle components other than a steering wheel 10 (e.g., on a center console). Overall, the user interface 14 may allow a driver or other user to operate and/or adjust (e.g., by touching and/or swiping one or more icons or other symbols or buttons on the user interface 14) various features in the vehicle, including but not limited to cruise control and speed, phone calls, haptic levels, heating, air conditioning, radio stations, radio volume, navigation, vehicle lighting, etc.

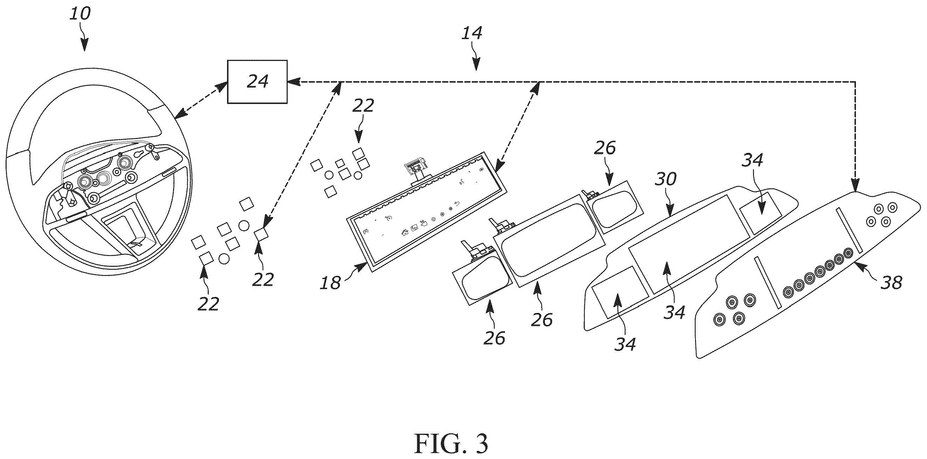

With reference to FIG. 3, the user interface 14 may include at least one display 18 (e.g., base display). In the illustrated embodiment, the display 18 is a liquid crystal display (LCD), although other embodiments may include different types of displays 18 (e.g., thin film transistor (TFT), or organic light-emitting diode (OLED)). As illustrated in FIG. 3, the display 18 may form a base, or lower layer, of the user interface 14, although in other embodiments the display 18 may form a middle layer, or upper layer, of the user interface 14. In some embodiments, the display 18 is or forms part of an LCD capacitive sensing display 18. In yet other examples, the user interface 14 does not include any display(s) 18.

With continued reference to FIG. 3, the user interface 14 may include at least one sensor 22. In some embodiments, at least one of the sensors 22 is a combined, single vibrotactile haptic actuator and force sensor. In some embodiments, at least one of the sensors 22 is a discrete vibrotactile haptic actuator (e.g., linear resonant actuator (LRA), eccentric rotating mass (ERM), or magnetic voice coil). In some embodiments, at least one of the sensors 22 is a discrete force sensor (e.g., Strain gauge) for force detection on the user interface 14. The sensors 22 may include a combination of discrete vibrotactile haptic actuators, discrete force sensors, and/or combined vibrotactile haptic actuators and force sensors.

In the illustrated embodiment, the user interface 14 includes a plurality of combined, single vibrotactile haptic actuators / force sensors 22, each coupled to the display 18 (if a display is provided). Each of the combined, single vibrotactile haptic actuators / force sensors 22 includes, for example, piezoelectric elements capable of force detection and haptic feedback. Other embodiments may include different numbers and arrangements of piezoelectric elements, or may include combined, single vibrotactile haptic actuators and force sensors 22 having elements other than piezoelectric elements.

The sensors 22 described above may sense a force applied to the user interface 14 (e.g., sensed force from a finger or fingers pressing down). As illustrated in FIG. 3, each of the sensors 22 may be driven by a microcontroller (e.g., microprocessor) 24 to vibrate in response to the force applied, to confirm that a user has pressed a finger against the user interface 14. The microcontroller 24 may be located for example on a printed circuit board on or within the steering wheel 10. In some embodiments, vibrational feedback may be activated as the user presses on the user interface 14 and as the user removes the force in two discrete feedback responses. The sensors 22 may also vibrate differently to indicate to the user how close a finger is to an icon on the user interface 14 with the finger location sensed, for example, by a capacitive touch sense surface 26. For example, stronger vibrations may be felt when the finger is far from the icon, and gradually weaker vibrations as the finger is moved closer, or weaker vibrations when the finger is far from the icon, and gradually stronger vibrations as the finger is moved closer.

With continued reference to FIG. 3, and as described above, the user interface 14 may include at least one capacitive touch sense surface 26 (e.g., sensing surface with or without backlighting). In the illustrated embodiment, the user interface 14 includes three capacitive touch sense surfaces 26 (one larger central capacitive touch sense surface 26 and two smaller capacitive touch sense surfaces 26), each backlit with light-emitting diodes (LEDs). Other embodiments may include other types of backlighting, or no backlighting. In some embodiments, the capacitive touch sense surfaces 26 are (or form part of) thin film transistor (TFT) or organic light-emitting diode (OLED) touch displays (if a display is provided). As illustrated in FIG. 3, one or more of the sensors 22 may be positioned behind the display 18 (e.g., on a backplate behind the display 18 if the display 18 is provided). In some embodiments, one or more of the sensors 18 may be positioned in front of the display 18, or to a side of the display 18. For example, in some embodiments, the user display 14 may include at least one vibrotactile haptic actuator sensor 22 that is positioned behind the display 18, and may include at least one force sensor 22 that is positioned in front of, or to a side of, the display 18. The capacitive touch sense surfaces 26 may be positioned over the display 18, or for example be integrally formed as part of the display 18. In some embodiments, some of the sensors 22 are positioned (e.g., sandwiched) between the capacitive touch sense surfaces 26 and a portion of the display 18. Other embodiments may include different numbers and arrangements of the capacitive touch sense surface(s) 26, sensors 22 and display(s) 18 than that illustrated. For example, as described above, in some embodiments the capacitive touch sense surfaces 26 may be formed integrally as part of (e.g., in one piece with) the display 18. In some embodiments the sensors 22 may be formed as part of the capacitive touch sense surfaces 26, or as part of the display 18, or as part of other components on the user interface 14.

With continued reference to FIG. 3, in some embodiments the user interface 14 may include a film 30 (e.g., frame) with cutouts 34 sized and shaped to correspond to the size and shape of the three capacitive touch sense surfaces 26. The film 30 may be placed, for example, over the display 18 (if the display 18 is provided) and/or the capacitive touch sense surfaces 26. Other embodiments may not include the film 30, or may include a film 30 having other numbers and arrangements of cutouts 34 than that illustrated.

With continued reference to FIG. 3, the user interface 14 may include at least one outer layer 38 with capacitive touch sensing. For example, in the illustrated embodiment, the outer layer 38 is a single discrete layer (e.g., made at least partially of plastic) that is coupled to, and extends over, each of the three capacitive touch sense surfaces 26 and the film 30. In other embodiments, the outer layer 38 may be coupled instead, for example, to only one of the capacitive touch sense surfaces 26, or to another component. In some embodiments, the outer layer 38 is formed integrally as part of (e.g., in one piece with with) the capacitive touch sense surface(s) 26, and/or the display(s) 18, and/or other components of the user interface 14. For example, in some embodiments the user interface 14 include a single display 18 that includes capacitive touch sense surfaces 26 thereon. At least one of the sensors 22 may be located, for example, behind the single display 18.

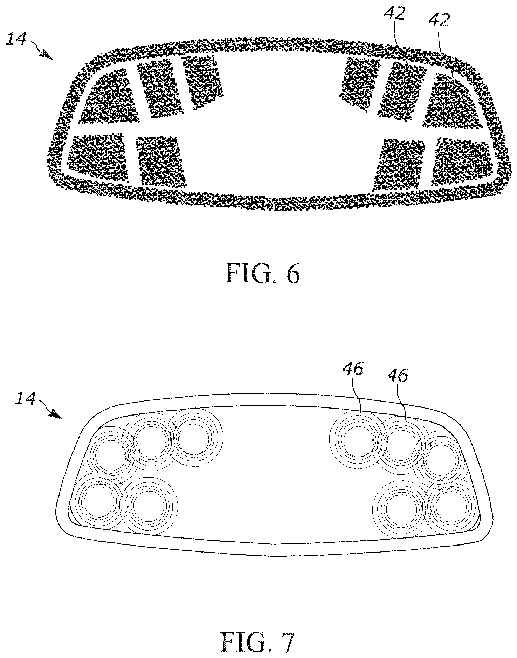

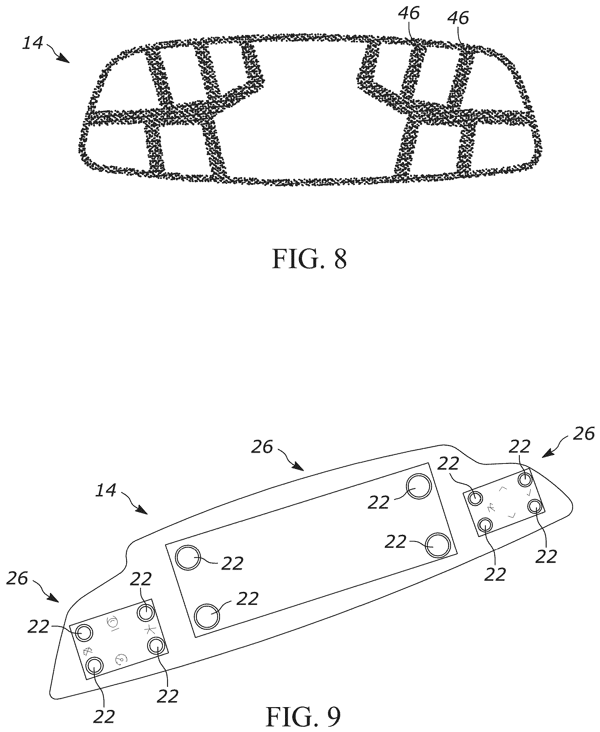

With reference to FIGS. 6-8, the user interface 14 may include mapping, having at least one zone 42 corresponding to a texture or other feedback created on the outer layer 38 (e.g., by the microcontroller 24). For example, as illustrated in FIG. 6, the user interface 14 may include a variety of zones 42. Each of the zones 42 may provide the same feedback to the user, or for example may provide different textures and feels to the user, depending on the vehicle feature associated with each zone 42. In some embodiments, and with reference to FIGS. 7 and 8, a divider wall or walls 46 may exist between each icon on the user interface 14, providing feedback to indicate to the user that the finger is moving (e.g., sliding) from one icon to another without looking at the user interface 14. With continued reference to FIGS. 6-8, in the illustrated embodiment the darker (e.g., black) areas (e.g., the divider wall or walls 46) may correspond to areas with one type or level of feedback, whereas the lighter (e.g., white) areas may correspond to areas with a different type or level of feedback. In some embodiments, and as illustrated in FIG. 7, the circular divider walls 46 may provide different types of levels of feedback than other areas along the user interface 14. Moving inwardly from these walls 46 (e.g., toward an icon on the user interface 14), the type or level of feedback may eventually be eliminated.

In some embodiments, the different settings on the user interface 14 (e.g., on the outer layer 38) may be adjusted through a slider or knob on the user interface 14. In some embodiments, the force sensing with vibrotactile feedback described above that is associated with the sensors 22, may be used on a surface of a steering wheel user interface 14 that does not have a display screen. Such a user interface 14 may have icons with backlighting, and such icons may be secret or hidden until they are lit.

As described above, the user interface 14 may include one or more sensors 22 (e.g., to provide feedback that a user has pressed or touched the user interface 14). With reference to FIG. 9, in some embodiments the sensors 22 may be positioned and spaced out along the user interface 14 in different patterns or spacings (represented by the round "dots" in FIG. 9). In the illustrated embodiment, each of the three capacitive touch sense surfaces 26 has four sensors 22, spaced in the four corners of the capacitive touch sense surface 26. Other embodiments may include different numbers and arrangements of sensors 22.

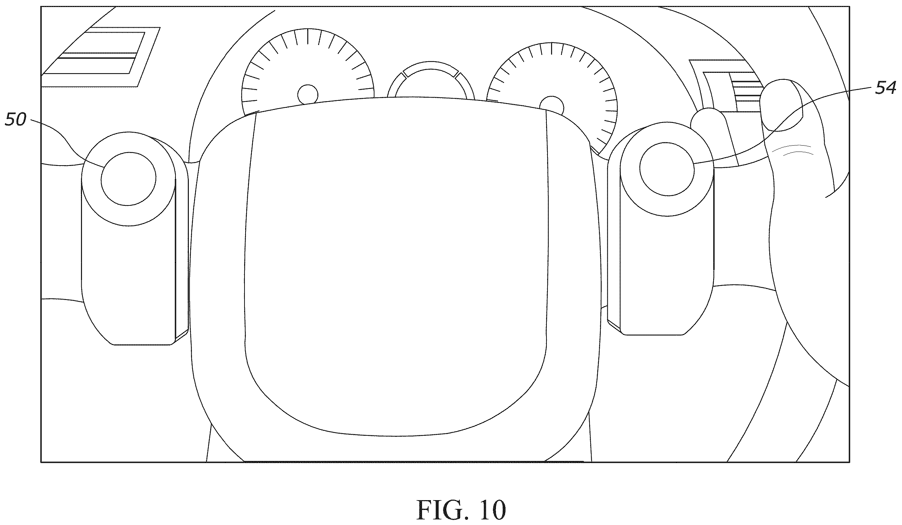

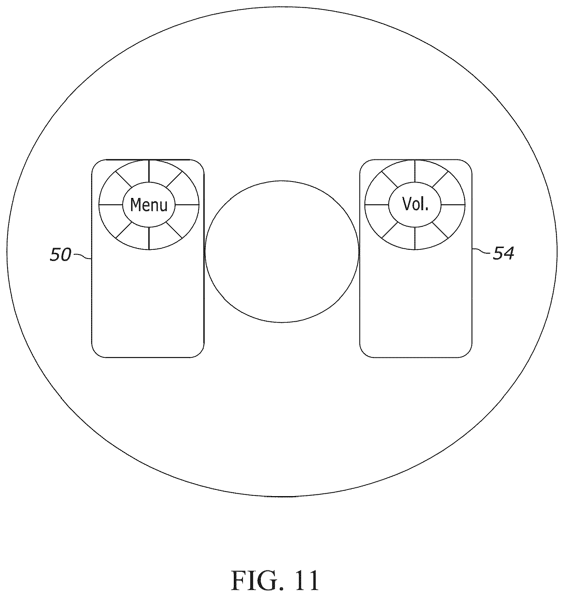

With reference to FIGS. 10 and 11, in some embodiments feedback may be provided as the user moves a finger in a circle around the surface. For example, a detent or other feedback may be felt around the surface of a menu 50 and/or a vehicle setting 54 user interface region. The feedback that is generated may vary from low to high or high to low as the finger is moved around the surface to indicate and confirm actions taken by the user interface (e.g., volume increase or decrease, navigating through a menu of options, etc.).

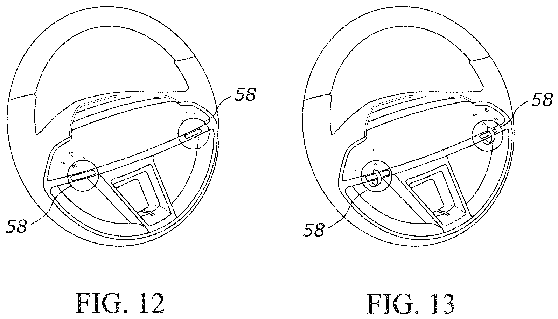

With reference to FIGS. 12 and 13, in some embodiments the user interface 14 may include a physical structure or structures 58 (e.g., chrome roller wheels) along or adjacent the outer layer 38. If these structures 58 are capacitive, they may be used for example to turn on different capacitive backlight options (e.g., icons) and turn others off. For example, if the user touches / moves the structure 58, a first set of icons may appear on the user interface 14, and if the user touches / moves the structure 58 again a different set of icons may appear (with the first set going dark or otherwise becoming hidden).

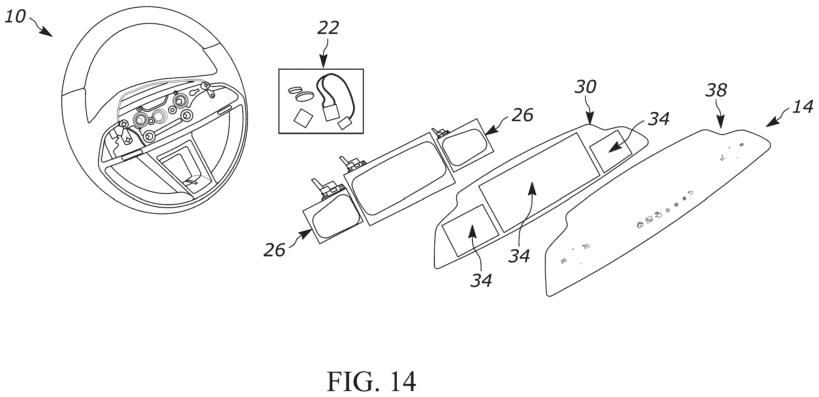

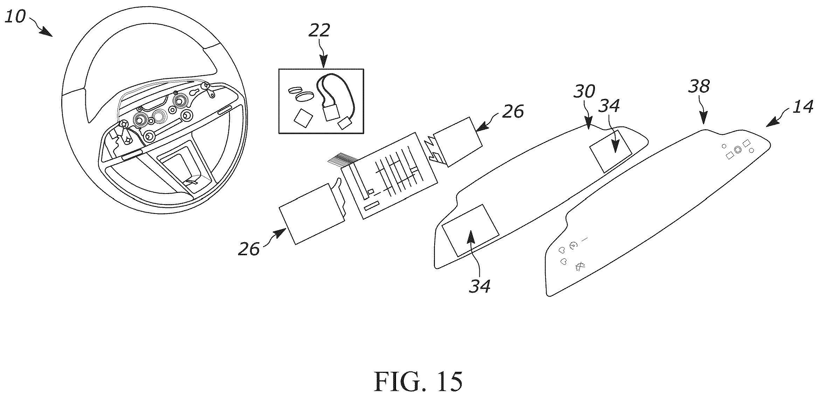

As noted above, the user interface 14 may include any number and combination of the components described herein (e.g., any number and combination of a base display(s) 18, sensor(s) 22 (combined or discrete), capacitive touch sense surface(s) 26, or outer layer(s) 38). FIGS. 14 and 15 illustrate one comparison, for example, between a user interface 14 that includes three capacitive touch sense surfaces 26 (FIG. 14), as compared to a user interface 14 that includes two capacitive touch sense surfaces 26 (FIG. 15). In each case, the overall user interface 14 may still have the look and feel of a single unitary user interface 14 (e.g., one large touch display module).

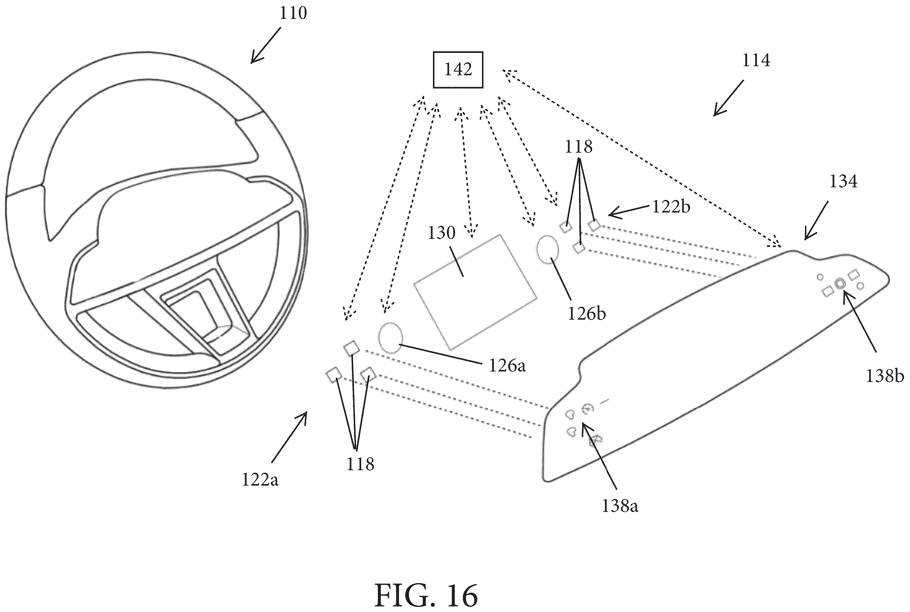

FIG. 16 illustrates a steering wheel 110. The steering wheel 110 may be used, for example, on a motor vehicle (truck, sedan, van, etc.), or other vehicles or equipment. The steering wheel 110 includes a user interface 114. The user interface 114 may be positioned generally centrally (e.g., along a steering wheel hub), although other embodiments may include different positions for the user interface 114 (e.g., located at a top of the steering wheel 110, along a bottom of the steering wheel 110, along a side of the steering wheel 110, along an outer ring of the steering wheel 110, etc.).

In some embodiments, the user interface 114 is used on other vehicle components other than a steering wheel 110 (e.g., on a center console). Overall, the user interface 114 may allow a driver or other user to operate and/or adjust (e.g., by touching and/or swiping one or more icons or other symbols or buttons on the user interface 114) various features in the vehicle, including but not limited to cruise control and speed, phone calls, haptic levels, heating, air conditioning, radio stations, radio volume, navigation, vehicle lighting, etc.

With continued reference to FIG. 16, the user interface 114 may include at least one force sensor 118. The force sensor 118 may measure a degree of force applied by user input (e.g., fingertip) on the user interface 114, and/or may determine a location of the applied force. In some embodiments, one or more of the force sensors 118 is a discrete force sensor, measuring only force and/or location of force. One or more of the sensors 118 may be a micro-electro-mechanical system (MEMS) sensor for force detection. In some examples, one or more of the sensors 118 may be a strain gauge, piezo element, or other type of sensor for measuring force. In some examples, one or more of the sensors 118 may be a silicone-capacitive sensor. For example, the sensor 118 may include a capacitive sheet wrapped partially or entirely around a silicone form. When an external force is applied to the capacitive sheet (e.g., in a direction normal to the surface of the capacitive sheet), one section (e.g., an upper section) of the capacitive sheet may move physically closer to another section (e.g., a lower section) of the capacitive sheet, while the silicone form therebetween the two sections may resist the movement. A capacitive change in the sheet or in the overall sensor may be detected as a result of the change in distance between the two sections. This capacitive change may be used to detect the force and/or determine the amount of force that was applied, and/or may be used to detect a location of the force that was applied.

In the illustrated embodiment, the user interface 14 includes a first set 122a of three discrete force sensors 118, and a second set 122b of three discrete force sensors 118. In other examples, the user interface 14 includes only a single set of discrete force sensors 118, or more than two sets of discrete force sensors 118, and/or includes other numbers of force sensors 118 in one or more of the sets of force sensors 118.

With continued reference to FIG. 16, the user interface 114 may include at least one haptic element 126 that provides haptic feedback to the user. In some embodiments, one or more of the haptic elements 126 are discrete haptic elements, providing only haptic feedback. In the illustrated example, the user interface 114 includes two discrete haptic elements 126. A first haptic element 126a is associated with the first set 122a of discrete force sensors 118, and a second haptic element 126b is associated with the second set 122b of discrete force sensors 118. In other examples, the user interface 114 may include two or more haptic elements 126 associated with one or more sets of discrete force sensors 118.

The haptic elements 126 may be any of a variety of different types of haptic elements. In some examples, one or more of the haptic elements 126 may be a discrete vibrotactile haptic actuator (e.g., linear resonant actuator (LRA), eccentric rotating mass (ERM), or magnetic voice coil). In some examples, one or more of the haptic elements 126 includes a piezoelectric element or elements.

In yet other embodiments, at least one of the force sensors 118 and/or haptic elements 126 is a combined, single force sensor and actuator that both measures force and/or location of force, and also provides haptic feedback to the user. In some embodiments, a combined, single force sensor and actuator may include, for example, piezoelectric elements capable of both force detection and/or haptic feedback.

With continued reference to FIG. 16, the user interface 114 may include a light element 130. The light element 130 may be a source that provides illumination (e.g., backlighting, etc.) for the user interface 114. Other examples of the user interface 114 may include other numbers and arrangements of light elements 130 than that illustrated. Other examples of the user interface 114 may not include a light element 130.

With continued reference to FIG. 16, the user interface 114 may also include a touch surface 134. As illustrated in FIG. 16, the touch surface 134 may be positioned over the force sensors 118, the haptic elements 126, and/or the light element 130. In some examples, the touch surface 134 forms part of an overall panel (or other structure) that sits for example along a center region of the steering wheel 110, and at least a portion of the overall panel or other structure is visible to a user during use of the user interface 114. As illustrated in FIG. 16, the touch surface 134 may include one or more user interface regions 138 that are designed for specific types of user interactions. In the illustrated example, the touch surface 134 includes a first user interface region 138a associated with the first set 122a of force sensors 118 (and for example with the first haptic element 126a), and a second user interface region 138b associated with the second set 122b of force sensors 118 (and for example with the second haptic element 126b).

In the illustrated example, the first user interface region 138a corresponds to volume control and use of a phone in the vehicle, and the second user interface region 138b corresponds to control of a radio (e.g., on / off, and setting of channels) in the vehicle. In other embodiments, the touch surface 134 may include only a single user interface region, or may include more than two user interface regions. Additionally, the user interface regions may be regions corresponding to features other than a phone or radio. The user interface regions instead may correspond to temperature settings, or vehicle diagnostics, or navigation control, or to any of a number of different features associated with a vehicle (or with any other system associated with the user interface 114). In some examples, the user interface regions 138 are defined by one or more buttons, graphics, or regions with buttons or graphics.

With continued reference to FIG. 16, the user interface 114 may include a controller 142 (e.g., with a microprocessor) that controls one or more of the components of the user interface 114. For example, the controller 142 may be coupled (e.g., wired or wirelessly) to one or more of the force sensors 118 or sets of force sensors 122a, 122b, the haptic elements 126a, 126b, the light element 130, and/or the touch surface 134. The controller 142 may be located for example on a printed circuit board on or within the steering wheel 10, or in a different location (e.g., if the user interface 114 is used on a system or component other than a steering wheel 10).

During use of the user interface 114, one or more of the force sensors 118 may sense a force applied to the first user interface region 138a or the second user interface region 138b (e.g., sensed force from a finger or fingers pressing down on the touch surface 134). For example, one, two, or all of the three force sensors 118 in the first set 122a of force sensors 118 may detect at least some force indicating that a user is pressing down on a portion the first user interface region 138a. Based on this input, the force sensors 118 in the first set 122a of force sensors 118 may send signals to the controller 142, and the controller 142 may determine where exactly the user has pressed a finger on the first user interface region 138a.

In the illustrated example, and as described above, the first set 122a of force sensors 118 includes three discrete force sensors 118. The controller 142 may be programmed to therefore triangulate a location of the actual finger press, based on the information received from the three force sensors 118.

Similarly, one or more of the force sensors 118 may sense a force applied to the second user interface region 138b (e.g., sensed force from a finger or fingers pressing down on the touch surface 134). For example, one, two, or all of the three force sensors 118 in the second set 122b of force sensors 118 may detect at least some force indicating that a user is pressing down on a portion the second user interface region 138b. Based on this input, the force sensors 118 in the second set 122b of force sensors 118 may send signals to the controller 142, and the controller 142 may determine where exactly the user has pressed a finger on the second user interface region 138a (e.g., via triangulation).

With continued reference to FIG. 16, one or more of the force sensors 118 may be sensitive to force detection, even if the force sensor 118 is not located directly under (e.g., in line with) the first user interface region 138a or the second user interface region 138b, and/or even if the force sensor 118 is not located along a force vector (or parallel thereto) configured to be applied by a user's finger on the user interface region 138 (e.g., a force vector that is normal to the touch surface 134). Accordingly, the force sensors 118 may be spread out and/or offset beneath the touch surface 134, such that only one (or two) for example of the three force sensors 118 in the first set 122a of force sensors 118 is actually located directly under the first user interface region 138a. Similarly, in some examples only one (or two) for example of the three force sensors 118 in the second set 122b of force sensors 118 may actually be located directly under the second user interface region 138b (e.g., along a force vector or force vectors associated with a particular user interface region configured to be applied by a user to the touch surface 134). In some examples, none of the force sensors 118 are located directly under the first user interface region 138a and/or the second user interface region 138b. In some examples, the force sensors 118 within a set of force sensors may be spread out laterally relative to one another, and for example generally evenly, underneath the touch surface 134, rather than being grouped tightly together in one or more regions under the touch surface 134. This ability to generally offset the force sensors 118 relative to the user interface regions 138 may facilitate easier assembly and/or packaging of the user interface 114. Other examples include other arrangements and patterns of force sensors 118.

With continued reference to FIG. 16, in some examples, the user interface 114 does not rely at all on capacitive touch technology. Rather, the user interface 114 instead relies only on the force sensors 118 (and their spaced positioning under the interface regions 138) to determine user touch location in the user interface 114.

With continued reference to FIG. 16, once a user touch location has been determined (e.g., calculated by the controller 142 based on input received from one or more of the force sensors 118), the controller 142 may send a signal to one or more of the haptic elements 126 to generate a haptic response (e.g., vibration). In the illustrated example, the first haptic element 126a is associated with the first user interface region 138a, and the second haptic element 126b is associated with the second user interface region 138b. If the controller 142 determines that a user has pressed a finger down on the touch surface 134 in the "volume up" region of the first user interface region 138a, for example, the controller 142 may cause the first haptic element 126a to vibrate (e.g., in a first pattern or intensity). If the controller 142 determines that a user has pressed a finger down on the touch surface 134 in the "volume down" region of the first user interface region 138a, the controller 142 may cause the first haptic element 126 to vibrate (e.g., in a second pattern or intensity, equal to or different than the first pattern or intensity). In some examples, the user interface 114 may have different types of haptic feedbacks for each of the different user interface regions, and/or for areas within each region.

While the haptic elements 126 are illustrated in certain locations in FIG. 16 relative to the force sensors 118, in other examples the haptic elements 126 may be located in different positions (e.g., spaced farther away from the force sensors 118, or for example located more directly between the force sensors 118 in each set of force sensors 118).

In some examples, vibrational feedback from the haptic elements 126 may be activated as the user presses on the touch surface 134, and as the user removes the force in two discrete feedback responses. The haptic elements 126 may also vibrate differently to indicate to the user how close a finger is to a portion of the touch surface 134. For example, stronger vibrations may be felt when the finger is far away from the first interface region 138a (or the second user interface region 138b) and gradually weaker vibrations as the finger is moved closer, or weaker vibrations when the finger is far away and gradually stronger vibrations as the finger is moved closer.

Other examples include other types of haptic feedback. For example, in some embodiments, the haptic element or elements 126 may provide a particular haptic feedback (e.g., buzz and/or vibration) only if the user is touching an area on the user interface region 138 that is not the first user interface region 138a or the second user interface region 138b (e.g., letting the user know that he or she is touching an incorrect area that will not change a vehicle feature, and that the user should try moving his or her finger).

With continued reference to FIG. 16, the user interface 114 may include any number and combination of the components described herein, including other components than that illustrated in FIG. 16. For example, the user interface 114 may include one or more elements of the user interface 14 described further above (e.g., any number and combination of a base display(s) 18, sensor(s) 22 (combined or discrete), capacitive touch sense surface(s) 26, or outer layer(s) 38 with surface frictional haptic feedback).

Some of the examples may be further described by reference to the following numbered clauses:
1. A user interface for a vehicle, the user interface comprising:
   a touch surface having a user interface region;
   a set of three force sensors disposed below the touch surface, wherein the set of three force sensors corresponds to the user interface region; and
   a controller coupled to the three force sensors, wherein the controller is configured to triangulate a location of a finger press on the touch surface based on feedback from each of the three force sensors.
   Preferably, at least one haptic element is disposed below the touch surface, wherein the at least one haptic element is configured to provide a first type of haptic feedback, and is also configured to provide a second, different type of haptic feedback.
2. The user interface of clause 1, wherein each of the three force sensors in the set of three force sensors is configured to detect a force of a user's finger pressed against the touch surface.
   Preferably, the at least one haptic element includes a plurality of haptic elements, wherein the plurality of haptic elements includes a first one of the plurality of haptic elements that provides the first type of haptic feedback, and a second one of the plurality of haptic elements that provides the second type of haptic feedback,
3. The user interface of clause 1 or clause 2, further comprising a haptic element disposed below the touch surface, wherein the haptic element corresponds to the user interface region.
   Alternatively, at least one haptic element is configured to generate a vibrational haptic response when a user's finger is pressed against the touch surface, and wherein the vibrational haptic response is configured to change in at least one of a pattern or intensity as the user's finger moves along the touch surface
4. The user interface of clause 3, wherein the haptic element is configured to generate a vibrational haptic response when a user's finger is pressed against the touch surface.
   Alternatively, at least one haptic element is configured to generate a vibrational haptic response when a user's finger is pressed against the touch surface, and wherein the at least one haptic element is configured to generate the vibrational haptic response only if the user's finger is pressed against the touch surface in a region located outside of the user interface region
5. The user interface of clause 3 or clause 4, wherein the or the at least one haptic element includes a piezoelectric element.
6. The user interface of any of the preceding clauses, wherein the user interface region is a first user interface region and the set of three force sensors is a first set of three force sensors, wherein the user interface includes a second user interface region and a second set of three force sensors disposed below the touch surface, wherein the second set of three force sensors corresponds to the second user interface region.
7. The user interface of clause 6, further comprising a first haptic element disposed below the touch surface and a second haptic element disposed below the touch surface, wherein the first haptic element corresponds to the first user interface region, and the second haptic element corresponds to the second user interface region.
   Alternatively, the at least one haptic element includes a first haptic element that further comprising a first haptic element disposed below the touch surface and a second haptic element disposed below the touch surface, wherein the first haptic element corresponds to the first user interface region, and a second haptic element that element corresponds to the second user interface region.
8. The user interface of clause 7, wherein the controller is coupled to each of the first set of three force sensors, the second set of three force sensors, the first haptic element, and the second haptic element.
   Additionally or alternatively, the user interface region is configured to display icons, wherein the icons include backlighting, wherein the user interface is arranged such that a first set of icons is configured to appear on the user interface region during a first operation of the user interface, and wherein a second, different set of icons is configured to appear on the user interface region during a second operation of the user interface, and wherein the first set of icons is configured to become hidden during the second operation of the user interface
9. The user interface of any of the preceding clauses, wherein the set of three force sensors includes at least one of a micro-electro-mechanical system (MEMS) sensor, a strain gauge, a piezo element, or a silicone-capacitive sensor.
10. The user interface of any of the preceding clauses, wherein at least one of the three force sensors in the set of three force sensors is positioned directly under the user interface region, and wherein at least one of the three force sensors in the set of three force sensors is not positioned directly under the user interface region.
11. A user interface for a vehicle, the user interface comprising:
   a touch surface having a user interface region; and
   a set of three force sensors disposed below the touch surface, wherein the set of three force sensors corresponds to the user interface region;
   wherein at least one of the three force sensors in the set of three force sensors is positioned directly under the user interface region, and wherein at least one of the three force sensors in the set of three force sensors is not positioned directly under the user interface region.
12. The user interface of clause 11, wherein each of the three force sensors in the set of three force sensors is configured to detect a force of a user's finger pressed against the touch surface.
13. The user interface of clause 11 or clause 12, further comprising a haptic element disposed below the touch surface, wherein the haptic element corresponds to the user interface region.
14. The user interface of claim 13, wherein the haptic element is configured to generate a vibrational haptic response when a user's finger is pressed against the touch surface.
15. The user interface of clause 13 or clause 14, wherein the haptic element includes a piezoelectric element.
16. The user interface of any of clauses 11-15, wherein the user interface region is a first user interface region and the set of three force sensors is a first set of three force sensors, wherein the user interface includes a second user interface region and a second set of three force sensors disposed below the touch surface, wherein the second set of three force sensors corresponds to the second user interface region.
17. The user interface of clause 16, further comprising a first haptic element disposed below the touch surface and a second haptic element disposed below the touch surface, wherein the first haptic element corresponds to the first user interface region, and the second haptic element corresponds to the second user interface region.
18. The user interface of claim 17, further comprising a controller coupled to each of the first set of three force sensors, the second set of three force sensors, the first haptic element, and the second haptic element.
19. The user interface of any of clauses 11-18, wherein the set of three force sensors includes at least one of a micro-electro-mechanical system (MEMS) sensor, a strain gauge, a piezo element, or a silicone-capacitive sensor.
20. The user interface of any of clauses 11-19, wherein the at least one of the three force sensors in the set of three force sensors that is positioned directly under the user interface region is positioned along a force vector configured to be applied by a user's finger on the user interface region, and wherein the at least one of the three force sensors in the set of three force sensors that is not positioned directly under the user interface region is not positioned along the force vector configured to be applied by the user's finger on the user interface region.
21. A user interface for a vehicle, the user interface comprising:
   a touch surface having a first user interface region and a second user interface region;
   a first set of three discrete force sensors disposed below the touch surface and corresponding to the first user interface region;
   a first discrete haptic element disposed below the touch surface and corresponding to the first user interface region;
   a second set of three discrete force sensors disposed below the touch surface and corresponding to the second user interface region;
   a second discrete haptic element disposed below the touch surface and corresponding to the second user interface region; and
   a controller coupled to each of the first set of three discrete force sensors, the first discrete haptic element, the second set of three discrete force sensors, and the second discrete haptic element.
   Preferably, a light element is disposed below the touch surface and configured to provide illumination for at least one of the first user interface region or the second user interface region.
22. The user interface of clause 21, wherein the first discrete haptic element is configured to provide a first type of haptic feedback for the first user interface region, and wherein the second discrete haptic element is configured to provide a second, different type of haptic feedback for the second user interface region.
23. The user interface of clause 21 or 22, wherein the first discrete haptic element is configured to generate a vibrational haptic response when a user's finger is pressed against the touch surface, and wherein the vibrational haptic response is configured to change in at least one of a pattern or intensity as the user's finger moves along the touch surface, wherein the touch surface is configured to display icons, wherein the icons include backlighting, wherein the user interface is arranged such that a first set of icons is configured to appear on the touch surface during a first operation of the user interface, and a second, different set of icons is configured to appear on the touch surface during a second operation of the user interface, wherein the first set of icons is configured to become hidden during the second operation of the user interface.
24. The user interface of one of clauses 1 to 10, further comprising a fourth force sensor disposed below the touch surface, wherein the fourth force sensor further corresponds to the user interface region.

Although various embodiments have been described in detail with reference to certain examples illustrated in the drawings, variations and modifications exist within the scope and spirit of one or more independent aspects described and illustrated.

## Claims

1. A user interface (14, 114) for a vehicle, the user interface (14, 114) comprising:
a touch surface (134) having a user interface region (138);
a set of three force sensors disposed below the touch surface (134), wherein the set of three force sensors corresponds to the user interface region (138); and
a controller (142) coupled to the three force sensors, wherein the controller (142) is configured to triangulate a location of a finger press on the touch surface (134) based on feedback from each of the three force sensors.

2. The user interface (14, 114) according to claim 1, wherein each of the three force sensors in the set of three force sensors is configured to detect a force of a user's finger pressed against the touch surface (134).

3. The user interface (14, 114) according to claim 1 or 2, further comprising a haptic element (126, 126a, 126b) disposed below the touch surface (134), wherein the haptic element corresponds to the user interface region (138), wherein the haptic element (126, 126a, 126b) is preferably configured to generate a vibrational haptic response when a user's finger is pressed against the touch surface (134), wherein the haptic element (126, 126a, 126b) more preferably includes a piezoelectric element .

4. The user interface (14, 114) according to claim 1, wherein the user interface region (138) is a first user interface region (138a) and the set of three force sensors is a first set of three force sensors, wherein the user interface (14, 114) further includes a second user interface region (38b) and a second set of three force sensors disposed below the touch surface (134), wherein the second set of three force sensors corresponds to the second user interface region (38b).

5. The user interface (14, 114) according to claim 4, further comprising a first haptic element (126, 126a) disposed below the touch surface (134) and a second haptic element (126b) disposed below the touch surface (134), wherein the first haptic element corresponds to the first user interface region (138a), and the second haptic element corresponds to the second user interface region, wherein the controller (142) is preferably coupled to each of the first set of three force sensors, the second set of three force sensors, the first haptic element (126, 126a), and the second haptic element (126b).

6. The user interface (14, 114) according to one of claims 1 to 5, wherein the set of three force sensors includes at least one of a micro-electro-mechanical system (MEMS) sensor, a strain gauge, a piezo element, or a silicone-capacitive sensor

7. The user interface (14, 114) according to one of claims 1 to 6, wherein at least one of the three force sensors in the set of three force sensors is positioned directly under the user interface region (138), and wherein at least one of the three force sensors in the set of three force sensors is not positioned directly under the user interface region (138).

8. A user interface (14, 114) for a vehicle, the user interface (14, 114) comprising:
a touch surface (134) having a user interface region (138); and
a set of three force sensors disposed below the touch surface (134), wherein the set of three force sensors corresponds to the user interface region (138);
wherein at least one of the three force sensors in the set of three force sensors is positioned directly under the user interface region (138), and wherein at least one of the three force sensors in the set of three force sensors is not positioned directly under the user interface region (138).

9. The user interface (14, 114) according to claim 8, wherein each of the three force sensors in the set of three force sensors is configured to detect a force of a user's finger pressed against the touch surface (134).

10. The user interface (14, 114) according to claim 8 or 9, further comprising a haptic element (126, 126a, 126b) disposed below the touch surface (134), wherein the haptic element corresponds to the user interface region (138), .
wherein the haptic element (126, 126a, 126b) is preferably configured to generate a vibrational haptic response when a user's finger is pressed against the touch surface,
wherein the haptic element (126, 126a, 126b) further preferably includes a piezoelectric element.

11. The user interface (14, 114) according to claim 8, wherein the user interface region (138) is a first user interface region (138a) and the set of three force sensors is a first set of three force sensors, wherein the user interface (14, 114) further includes a second user interface region (38b) and a second set of three force sensors disposed below the touch surface (134), wherein the second set of three force sensors corresponds to the second user interface region (38b).

12. The user interface (14, 114) according to claim 11, further comprising a first haptic element (126, 126a) disposed below the touch surface (134) and a second haptic element (126b) disposed below the touch surface (134), wherein the first haptic element corresponds to the first user interface region (138a), and the second haptic element corresponds to the second user interface region (38b).

13. The user interface (14, 114) according to claim 12, further comprising a controller (142) coupled to each of the first set of three force sensors, the second set of three force sensors, the first haptic element (126, 126a), and the second haptic element (126b).

14. The user interface (14, 114) according to one of claims 8 to 13, wherein the set of three force sensors includes at least one of a micro-electro-mechanical system (MEMS) sensor, a strain gauge, a piezo element, or a silicone-capacitive sensor.

15. A user interface (14, 114) for a vehicle, the user interface (14, 114) comprising:
a touch surface (134) having a first user interface region (138a) and a second user interface region (38b);
a first set of three discrete force sensors disposed below the touch surface (134) and corresponding to the first user interface region (138a);
a first discrete haptic element (126, 126a, 126b) disposed below the touch surface (134) and corresponding to the first user interface region (138a);
a second set of three discrete force sensors disposed below the touch surface (134) and corresponding to the second user interface region (38b);
a second discrete haptic element (126, 126a, 126b) disposed below the touch surface (134) and corresponding to the second user interface region (38b); and
a controller (142) coupled to each of the first set of three discrete force sensors, the first discrete haptic element (126, 126a, 126b), the second set of three discrete force sensors, and the second discrete haptic element (126, 126a, 126b).
